# EUROPEAN PATENT APPLICATION

(11) **EP 1 352 567 A1**
(43) Date of publication of application: **15.10.2003**
(21) Application number: 03007369.6
(22) Date of filing: 02.04.2003
(51) Int. Cl.: A23K 1/00, A23K 1/18

(54) **Feed for bovine neonates breeding and a process for its use**

(30) Priority: 10.04.2002 AR 0201323
(71) Applicant: Asociacion de Cooperativas Argentinas, Cooperativa Limitada, Buenos Aires (AR)
(72) Inventor: Fabian Lis, Alejandro, 2900-San Nicholàs, Prov. Buenos Aires (AR); Fabbroni, Miguel Angel, 2900-San Nicholàs, Prov. Buenos Aires (AR)
(74) Representative: Fernandez Lerroux, Aurelio

(57) **Abstract**

The invention relates to a feed for neonates breeding producing a metabolic energy of 4200 calories and a process for using such feed.

## Description

This invention is related to balanced feed for breeding bovines and, especially feed for breeding bovine neonates and the necessary process for applying it to newborn animals in order to provide them with a feed specifically prepared for highly accelerating the optimum development of the rumen; thus allowing neonates to be weaned on the second or third week of life, and providing an excellent animal growth under optimum sanitary conditions.

An additional purpose of this invention comprises the optimization of available resources for breeding, due to the fact that providing bovine neonates with this kind of feed, the management of breeding animals is remarkably simplified and cost effective by reducing cost and labor expenses of milk and/or milk substitutes.

Therefore, the purpose of this invention is obtaining a feed scientifically prepared for highlighting and taking advantage of the natural physiological conditions of bovine neonates during their digestive evolution from monogastric and milk-fed animals - pre-ruminant phase- to polygastric animals which depend only on dry feed intakes - ruminant phase. Bovine neonates needed a 4-month period to completely achieve this transformation. Through the feed and system of the invention, this takes approximately 14 days.

In the prior art detailed below there are several works developed and related to the present invention, among which we can mention the following United States patents:
Patent N°6,156,333 refers to "Pre-ruminant Invigorating and Stimulating Feed and its Use" and contains a dry formula based on 50 to 75% of proteins: 10 to 50% of animal plasma, 2.5 to 10% of micronutrients selected among a large number of minerals such as Co, Cu, I, etc. and, organic elements such as niacin, d-pantothenic acid, riboflavin, etc., several vitamins in well-determined quantities, not less than 2.5% of electrolytes selected from the salt group of Na, Mg, K, Ca and their combinations, not less than 2% of alicine, 2% of fructooligosaccharides and approximately 1% of microbes selected from a group composed of coagulans, licheniformis, subtilis, bifidobacteria bifidum, lactobacillus, acidophilus, casei, dairy, streptococcus diacetylactis and their mixtures. Percentages above are stated in weight.

The above mentioned patent is an extension of Patent N°5,795,990 which comprises the same formula and preparation method. It consists on providing the required quantity of water for dissolution.

Patent N°5,372,811 is a feed supplement for animals which contains a co-spray of dried-protein plasma and amylase.

Patent N°4,919,935 is a "Feed" supplemented with a carrier containing bacillus subtilis C-3102, organism deposited in the Institute of Fermentative Research, Department of Industrial and Technological Sciences of Japan.

Taking into account the above mentioned patents, it is obvious not only that their formulas do not interfere with that of this invention, but also that they comprise a complex and expensive formulation.

On the other hand, several kinds of domestic animal feed can be found in the marketplace and their formulas have similar features. However, they are different to the one comprised in this invention, and especially they have a different application. The following Argentine patents are examples thereof:
Patent N°244,954 is referred to "Animal Balanced Feed" providing a great protein, vitamin and mineral contribution that can be easily digested. It is composed of hydrolyzed feathers, fish silage, a vegetable load of bran and vegetable meal.
Patent N°240,863, "Feeding Mineral Mixture for Ruminants" is used for ruminants at pasture. It includes macro and micro-elements. Its purpose is to obtain cattle productive profitability by optimizing forage intakes so as to gain weight with less quantities of forage. It comprises milled minerals added in certain quantities.

Basically, all formulas found in the prior art refer to formulas for feeding animals either at home or at farms, or for improving weight gain. Those stated for preruminants are based on chemical organic or mineral elements or milk substitutes which are added to diets in order to accelerate their development. However, these products generally cause delays that slow down animals' growth since natural factors have not been considered, as stated below. These problems are solved with this invention.

Therefore, in order to take advantages from this invention, feed for breeding and a process for its use described below, the product is composed of 94 to 88% of dry matter, 20 to 30% of protein, 6 to 10% of fat, 3 to 6% of fiber, 5 to 7% of ashes, 1.2 to 1.4% of Ca and 0.8 to 1.2 of P. The product's digestibility reaches 93% providing metabolizable energy of 4,200 calories. The process for using this feed comprises a daily milk diet, its later interruption, the gradual introduction of this feed and baled fiber contribution. This combination will be defined in a consumption table described below.

For the purpose of providing a better understanding of this invention comprising feed for bovine neonates breeding and its use, so as to implement an easy feeding program, the following paragraphs include an accurate description of all the chemical and anatomic-biological features of calves growth from the womb to the ruminant phase upon which this invention is based. The invention also comprises a method in which several known factors intervene and result in the novelty disclosed herein by the inventors, stated as an example but not limiting the invention; its components can be selected among other equivalents following the principles of the invention.

Physiology and nutrition of nursing calves. Despite the fact that newborn calves are bound to become ruminants, with a four-compartment stomach that facilitates fiber digestion, they have not yet developed this ability, as it is known by those skilled in the art, and supported by accurate scientific researches carried out by the inventors. Therefore, the abomasum or true stomach that they have in this phase is the only stomach compartment with functional capacity. In order to fulfill that anatomic requirement, newborn calves have a structure made of rumen and reticulum tissues, called esophageal groove which, upon the nerve stimuli originated by sucking and the flow of liquids or chemicals (copper) through the esophagus, produce a partial contraction forming a tube that enables the flow of milk or milk substitutes during artificial breeding directly into the abomasum, allowing calves to digest and absorb nutrients contained in milk diets.

When milk gets into the abomasum two enzymes, called rennin and pepsin, are secreted and they curdle milk proteins (basically casein) resulting in a solid part (clot) which is retained at the abomasum, and a liquid part (whey) which still contains some proteins and all the lactose. Whey will pass to the duodenum at a rate of 300 to 400 ml/hr. for its later absorption.

Said clot contains milk fat that is partially digested by means of another enzyme called lipase. This enzyme is secreted by saliva and is included in milk diets while being swallowed. Digestion of fat in the pre-gastric phase is more efficient with milk fat than with other types of fat due to the different components of fatty acid chains. Coconut and palm oils are the most similar to milk.

The most effective enzyme that breaks down milk proteins is rennin, especially in the nearly neutral pH that exits at the abomasum immediately after milk diet intakes. The relation that exists between these two enzymes may vary among different calves.

As regards abomasum pH, while being nearly neutral before the intake, it becomes extremely acid (pH=2) after the secretion of hydrochloric acid.

Lactase is another enzyme secreted at the small intestine. It is in charge of the breakdown of lactose into beta-d-galactose and alpha-d-glucose molecules, which will be absorbed at the intestine via passive diffusion in order to be transported through the portal bloodstream to the liver taking part of glycolysis and glycogenic phenomena or both of them, according to the final destination of the carbohydrates (immediate use or energetic reserve).

The final digestion of fat and proteins in milk or milk substitutes occurs at the small intestine through the secretion of enzymes by the pancreas. Proteins are broken down into amino acids and fats into glycerol and fatty acids which will be actively or passively transported into the portal and lymphatic bloodstream as kilomicrons ending at the liver. There they will be converted into proteins and fats that will constitute kilograms of weight, or they will be used for other purposes through glycogenic processes or the formation of ketone groups.

Digestion at the small intestine will be carried out under alkaline conditions as a result of pancreatic secretion.

Therefore, it could be stated that calves maintain an acid and alkaline balance in their digestive system. Nutritional disorders or bacterial infections arising out of inadequate feeding programs and mismanagement, respectively, cause diarrhea attacks resulting not only in the dehydration of the animal but also in a loss of electrolytes, thus modifying said acid-base balance, worsening the situation and placing their lives at risk.

Rumen Development. As it was stated above, although ruminants have a four-compartment stomach (omasum, abomasum, reticulum and rumen), during their first weeks of life the abomasum is the only compartment anatomical and functionally developed (monogastric phase).

The other stomach compartments are developed by the increase of solid diets. The development and functional capacity of these compartments are directly related to the increase of dry feed intakes. This growth has two phases called pre-ruminant and ruminant.

In order to get an idea of the changes that occur in the development of these stomach compartments it could be mentioned, for instance, that the abomasum constitutes 60% of the newborn's stomach capacity and the rumen makes up only 25%. A four-month calf's abomasum makes up 20% of the stomach capacity and the rumen 60%. In mature animals, the abomasum constitutes 7% of the stomach and the rumen 80%.

The production of volatile fatty acids (VFA) from the fermentation of dry feed is responsible for rumen tissue development. Rumen development and dry feed intakes are correlated in a positive way, so that rumination starts approximately at the second week of life.

Acetic, propionic and butyric acids are essential VFAs that influence rumen development. Propionic and butyric acids are particularly important for the development of ruminal papillae, where end-products of the dry feed intake are absorbed. However, the presence of fiber helps rumen development by maintaining an optimum pH. It is known that the degree of acidity affects the type and efficiency of the papilla.

Digestion in the rumen is carried out through the fermentation of dry feed by million of bacteria and protozoa which appear naturally at birth. Ruminal bacteria and protozoa are first inoculated by the mother through liking after birth.

Size and functional development of the rumen must be balanced with the growth of other organs, hormones and enzymes that take part directly or indirectly in the digestion of dry feed and the absorption of the end-products produced.

In general, ruminants meet their glucose needs with the aid of gluconeogenesis. The main precursor is propionate. Glycogenic amino acids, especially alanine and glutamic acid, meet 25% of their needs. The rest is covered through glycerol or lactate which are used in special physical conditions.

Gluconeogenesis increases with glucose needs during pregnancy or lactation. Pancreas hormones, insulin and glucagon, control this process.

The quantity and type of rumen fermentation determine gluconeogenesis.

In the ruminant, glucose is converted into: energy, via citrate cycle. Lactose synthesis. Fetus feed. Lipogenesis. Glycerol, citrate and amino acids synthesis.

Glucose is the fetus' principal source of energy in pregnancy and of lactose in lactation. During growth, glucose provides the basic carbon for the synthesis of non-essential amino acids. This is essential in protein synthesis and meat production. High levels of propionate in the ruminal liquid are related to a greater retention of N due to the nature of propionate, thus releasing gluconeogenesis proteins.

Carbohydrates metabolism during fetal and neonate phases: Metabolism can be divided into four phases:
**1)** Fetal phase: the fetus receives glucose through the mother's bloodstream.
**2)** Neonate phase (up to the 2 or 3 week): the rumen is functional and glucose is supplied by lactose.
**3)** From the 3 to 12 week of life: the rumen starts to develop and less quantities of milk are supplied.
**4)** Adult: the rumen is well developed with glucose supply through gluconeogenesis.
   During the fetal phase, placenta converts glucose into fructose; therefore, blood has a high level of fructose and a low level of glucose.

Glucose concentration in the fetus' blood increases to 50% of the mother's. At the end of its gestation, fetus' liver synthesizes great quantities of glycogen that double the adult's concentration. This occurs due to the presence of enzymes that generate it from glucose and, eventually, fructose. Like adults, the fetus converts part of the glucose into fatty acids, preferentially acetate.

In the neonate phase, during the following two days after birth, the level of fructose in whey decreases from 60 mg to less than 5 mg/ml. Fructose is eliminated through urine since the necessary enzymes to metabolize it do not exist yet at the liver. Simultaneously, glucose levels increase from 50 to 100 mg/ml, even when the neonate is not fed. This implies glycogen synthesis which starts to flow rapidly and reaches levels of 10 mg within few hours after birth. The level in the cardiac muscle also decreases through a stimulus of the sympathetic nervous system, thus the release of adrenaline activates phosphorylase. Low level of glucose at birth may be attributed to a sympathetic stimulus.

Glucogen at the liver increases in the 3^{rd} week of life to levels similar to those in mature animals, 40 mg/gr. Something similar happens with the level of glucose in blood which is related to the simultaneous rumen development (McCandless and Dye; Attebery and Colvin). However, many works state that this is independent from rumen development, ration and VFA concentration and set forth that it is dependent on ontogenetic development (Steger, Lambert, et al.; Lupien, et al.).

Fetuses and neonates contain glucose both in plasma and in erythrocytes but, during the first weeks of life, erythrocyte levels decrease to the level in mature animals. One of the reasons for the decrease of glucose levels in blood is the lowest concentration of glucose in erythrocytes. This would result due to the replacement of fetal erythrocytes, rich in glucose, by adult erythrocytes which have less quantities of glucose.

Another factor contributing to the decrease of glucose levels is the reduction in milk intakes.

Within the following three months after birth, the development of the young ruminant to mature animals is related to the functional change in carbohydrates metabolism. Insulin secretion has no effects on one-day calves (Edwards, et al.). However, during the 2 and 4 weeks, the insulin level in plasma increases due to a glucose load. Later on, the capacity to secrete insulin decreases. Simultaneously, glucose level and its conversion rate decrease. This fact shows that, as the ruminant grows, the importance of glucose in the metabolism decreases (Comline and Edwards; Jarret, et al.). It is also shown by the decrease of glucose absorption capacity at the intestines in mature animals, while pre-ruminant calves can absorb it rapidly (Coombre and Smith).

The above stated shows that the enzymatic system is adaptable to feeding program changes, which passes from glucose conversion to gluconeogenesis requirements. Pentose-cycle enzyme activity, like those of glycolysis, is higher in neonates than in mature ruminants (Filsell, et al.; Howarth, et al.; Goetsch, et al.). Moreover, the activity of the enzymes that catalyses glycogen formation from glucose diminishes (Ballard and Oliver) while that of glucose-6-phosphatase and fructose-1-6-dyphosphatase, which participate in the conversion of propionate and pyruvate to glycogen, increases (Howard, et al.).

These enzymatic changes occur due to the proliferation of VFAs in the rumen, whose derivatives activate pyruvatecarboxylase stimulating the formation of glucose. At the third week of life, hepatic enzyme (citratoliase), in charge of synthesizing lipids from glucose, has nearly the same activity than that of mature animals, almost non-existent. Therefore, the enzymes which facilitate the synthesis of lipids from acetate of adipose tissue acquire greater importance.

Digestion of carbohydrates. Most of the carbohydrates are digested in the rumen but there is a variable ration that may be digested in post-ruminal areas. All soluble carbohydrates are incorporated as stored microbial polysaccharides. The optimum pH for the polysaccharides synthesis is 6 or less. Since pH diminishes after the ingesta, there is an influence in the production of polysaccharides in the rumen. Bacteria contribute more than protozoa in its formation and utilization. Protozoa contribute with the 10% of the total utilized. Although they make a better use of saccharose, they store 80% of absorbed sugar as starch and they are more important in the formation of polysaccharides. They are very sensitive to the acid environment where they are destroyed.

Bacteria that do not grow, synthesize more starch than those that grow. The growth is limited to the presence of available N. Starch ferments in the rumen more slowly than in monogastrics, it increases ten times the glucose level in the ruminal liquid what leads to a greater polysaccharides synthesis. In its degradation, pH drops and the proportion of propionate increases. Protozoa have a very important function since they may absorb large amounts of starch quickly and thus prevent starch from the bacterial attack. Due to pH reduction, soluble starch rations cause the extinction of protozoa eliminating their beneficial effect.

The digestion of carbohydrates at the small intestine needs the enzymes provided by the organism. In the first weeks of life, calves that are mainly milk fed have a high lactase activity, low maltase and amylase activity and practically a non-existent saccharase activity. Therefore, lactose is easily digested, maltase and starch are not so easily digested and saccharose is indigestible. Enzymes supplied by the organism determine the digestion of carbohydrates in a young animal. In pancreas, the maltase activity remains constant and the amylase activity increases considerably due to the starch increase. This implies constant changes in animal diets.

Most starch coming from the rumen is broken down at the small intestine and is partially completed at the large intestine (caecum and colon) In tests done, 72% of the starch at the small intestine and 28% at the large intestine disappeared (Warson, Table 34). This reveals a limited capacity of digestion at the small intestine. It has been tested (Huber, et al.) that, both in calves and mature animals, the utilization of lactose is higher than the one of non-treated starch. Besides, it has been verified in experiences with calves (Huber, et al., Natrajan, et al.) that the starch fermented in the rumen is more digestible than forage gross content, motivated by the presence of microbial polysaccharides or by the rumen partial degradation. During two months, they have checked calves adaptation to bigger starch intakes due to higher digestibility. This brings as a result a higher sugar concentration in blood and a better development of pancreas tissue that is in charge of secreting amylase.

Mayer and Orskov provided information about the troublesome digestion of starch at the intestine. They tested that the starch infusions between 15-27 gr./kg of PV 0.75 the carbohydrates fractions that disappeared in the ileum were the following (sic): glucose with alpha bonds 58%, glucose 92% and oligosaccharides 69%. From this, it is inferred that the maltase digestion of oligosaccharides would restrict the digestion of starch at the intestine. The same authors have also tested that the intestinal tract presents glucose absorption limitations, and in sheep exceeding 400gr/dose there appears glucose in feces.

The optimum pH values in the intestine for the amylase range from 6.2 to 6.9 and from 6.8 to 7 for the maltase. In rations with high amounts of non-degradable starches in rumen, their fermentation in the large intestine should be considered; in this case, the caecum is functionally comparable to the rumen. The problems that arise are that part of the generated VFAs are lost in the feces and that bacterial protein produced cannot be digested, consequently N is also lost.

Nutritional characteristics of milk and milk substitutes: Milk substitutes that contain powdered whole or skim milk form clots of smaller size, but in larger amounts. The problem that may arise with these products is that during the process of dehydration, high temperatures are needed producing some denaturalization of milk proteins and resulting in a poor clot formation milk. The same occurs with milk substitutes that contain whey proteins and add protein supplements that come from soybean and fish proteins or from any other source. These milk substitutes do not form clots. Since these substitutes may achieve good results in calf breeding, it is necessary to admit that these animals can adapt themselves to a milk diet that fails to clot.

However, it is useful to state that these animals depend mostly on the quality of the protein supplements used, and a better management will be required during their breeding.

The use of low-quality protein supplements in milk substitutes may produce lack of digestibility of protein fractions and even of starch at the abomasum and intestine causing diarrhea crisis as a result of the presence of protein fractions in the intestinal lumen causing coloidosmotic and osmotic pressures that may bring water to the intestinal lumen.

The presence of protein fractions that induce inflammatory processes of allergenic origin at the abomasum and small intestine causes assimilation crisis or electrolyte loss resulting from damages to the abdominal and intestinal mucosa. This will cause an increase in the water flow to the intestinal lumen in order to balance osmotic pressures generating an increase in the volume of liquid at the intestine, what will cause a diarrheic process. What is much more serious is the loss of functional tissue in the abdominal and intestinal mucosa that affects the breakdown of nutrients in the future.

Anyway, and as a consequence of the increased use of milk substitutes, with productive results different from those obtained by the use of milk but, undoubtedly, quite satisfactory, it could be stated the great capacity that calves have in order to adapt to important quantity and quality variations of nutritional components of their milk diets. What has been stated before clearly explains the higher rates of morbidity and mortality on the first two weeks of breeding milk substitute-fed calves in comparison to liquid milk-fed calves. These problems are generally reduced by the use of diverse combinations of antibiotics in the different milk substitutes formulas.

The quality and quantity variations of milk substitutes nutritional components refer to the quantity of dairy components in their formulas, the type of dairy components (whey, whey protein concentrates, whole or skim milk), the nutritious quality of non-dairy components (soybean isolated proteins, soybean protein concentrates, micronized soybeans, wheat proteins, fish proteins) and the failure to generate inflammatory processes of allergic type in the calf digestive tract or causing complexes that unable the digestion of some dietary digestive structures.

Types of calf breeding and its management. There are some systems that separate female or male calves from their mother in order to get a cost-effective result and not to alter milk routines and/or cow management after birth.

The most common breeding method used in most dairy production countries is to breed calves away from their mothers. These methods are the following:
a) Individual:
   1) in stalls,
   2) in pens.
b) Collective:
   I) with a nurse cow, in groups.
   II) with milk or milk substitutes, in groups.

Each method has advantages and disadvantages. The main advantage in individual methods is the possibility of breeding calves in an independent way. Therefore, it allows to control the progress in intakes as well as the isolation of sick animals. Economics is its main disadvantage, being the stalls the most convenient method. Besides, after using this method for a long time, another important disadvantage that can be added is the great physical effort and time that breeders invest in calves moving. The latter is even more evidenced in those farms where more than 100 calves are bred.

Collective breeding methods are practically not used now except for countries such as New Zealand and Uruguay because their main advantage is their low cost but it is impossible to control dry and/or liquid feed intakes, there is little sanitary control over calves and the spread of diseases is more possible.

Apart from the breeding method used, calf management and a suitable breeding environment are extremely important.

With regard to calf management, it is essential to understand that it is necessary to control some external factors that produce a great number of nervous reactions in calves. Therefore, it is necessary to control some factors such as the intake timing, order and temperature.

Considering the environment, since calves are born with an immature thermo-regulating system, they are not able to control internal temperature; therefore, it is very important to provide shelters in order to avoid calves' exposition to extremely low and high temperatures.

It is also necessary to say that calves are born with a non-developed immunomodulatory system. Therefore, antibodies should be administered via colostrum. The mother's antibodies are big-sized macromolecules that can only get through the small intestine within the first 18 hours after birth. After this, the intercellular spaces of the intestinal mucosa start to close and the passage of antibodies is impossible.

### Feeding. It is composed by the following:

### Milk Diet and Solid Diet

The milk diet is based on milk or milk substitutes (dairy substitutes for mother's milk, generally composed of powder feed to be dissolved in water). Two daily intakes are normally administered with an 8-hour interval.

In nurse cow systems or in some collective systems it is not possible to control the amount of milk diet consumed by the animal, so the intake of important amounts of dry feed is delayed, and, therefore, calf rumen development is delayed and weaning problems may arise.

It is essential to follow quite strict management rules: 1) a fixed feeding order and timing should be followed since reflexes affect the esophageal groove and this allows the feed to get into the abomasum for its digestion. 2) feed temperature must be of 38-40°, within this range dietary fatty acids are better soluble, therefore, animals can easily digest them; if not, cases of bad digestion and absorption of fatty acids may arise reducing the dietary energy significantly.

Milk feed is administered for 50 -90 days. This varies according to the systems used.

The solid diet is composed of concentrates and fiber.

The use of liquid and solid diets in calf breeding is associated with getting a fast calf rumen development, including both a constant supply of milk feed and *ad limitum* dry feed, by increasing it gradually but constantly. The latter is directly related to rumen physical and functional development. It is important to state clearly that concentrates are administered for rumen histological and functional development while baled fibers are administered for rumen physical and functional development.

Since calf feeding is reduced to a constant milk diet from the fifteenth day after birth, calves weight gain rate is directly related to the nutritional quality of concentrates as well as to the intake capacity that calves may develop.

Calves reach daily intake rates of 1 kg. on the 30^{th} day after birth with a good concentrate. It is important to mention that the dry feed intake amount depends on another component that is the animal, in this case the intake rate is related to calves' metabolic size. Moreover, weight gains while breeding are always higher in calves weightier at birth, what is always related to a higher concentrate intake rate per animal.

Having been fed properly and taking into account each of the items mentioned before related to feeding, calves can only be weaned on average on the 60^{th} day after birth.

### DESCRIPTION:

Physiological bases for weaning calves by the 14^{th} day after birth with the formulation of the invention.

According to what has been said, newborn calves have an enzymatic activity related to an immature digestive capacity, very high lactase activity, low amylase and multase activities and non-existent disaccharidase activity. Therefore, lactose is easily digested, amylase and starch are not so easily digested and saccharose is indigestible.

As a result, it is clear that enzymes supply in newborn calves determines the digestion of carbohydrates. At the pancreas, maltase activity remains constant and amylase activity increases considerably in comparison with the gradual increase of starch intakes by calves, becoming constant around the one hundredth day of life. It has also been proved that the enzymes activities are totally dependent on the ingesta, having a great adaptability to dietary changes.

Most rumen carbohydrates are absorbed at the small intestine, 72%; only a small amount is digested at the large intestine, 28%.

Natrajan, et al. and Huber, et al. verified that calves' adaptability to higher starch intakes was possible if starch digestibility was improved. This was evidenced by the presence of larger sugar rates in blood and a better pancreas development mainly due to a larger amylase secretion.

Meyes and Orskow tested three starch infusions, incompatible digestion of 92% for glucose, 58% for glucose with alpha bonds and 69% for oligosaccharides, and they also verified that maltase reduces the oligosaccharides' digestion, thus limiting the digestion of starch at the intestine.

According to this invention, the use of dry feed as the only feed for calves with a digestibility of over 92% from the 14^{th} day of breeding will completely allow interruption of milk supply or milk substitutes, in no way affecting further calves growth.

The use of this type of feeds provides a better ruminant digestive tract development and, after 30 days, its development is similar to the one of a 4-month calf.

Nowadays, histological, inmunohistochemical and statistical research works are still being effected in order to establish accurately all the benefits that may arise from this technique, having already been detected in experimental trials but not yet systematized. The studies that are being carried out refer to the program whose results demand valuable farm and lab work. For the purposes of this paragraph, it is understood that those results may be included in this document when finished, not considering this as a non-valid data extension of this document.

The trial technical diagram uses 100 Holando-argentino calves that are fed half with the feed and procedure of this invention and the other half with a feed administered in a conventional way, aimed at using the Physical, Physiological, Chemical, Histological and Statistical monitoring system according to the principles of this invention.

The Physical Monitoring comprises the visual evaluation of calves' general status, diarrhea incidences, the measure of intakes progress, animals' weighing, the weight gain and conversion and the measure of stomach and ruminant papillae size.

The Physiological and Chemical Monitoring may allow to establish and compare the progress of the animal internal balance (homeostasis) what is tested by sexological analysis. The following will be tested: GOT-CPK-GTP- the alkaline and acid phosphates, enzymes that have a direct relation to the production of any type of cellular damage; insulin and glucagons, hormones generated by the pancreas that have a direct relation to carbohydrates; and pH measures of ruminal acidity.

The Histopathologic Monitoring will allow to measure tissue development and compare it with normal and abnormal histological evolutions as well as providing data for immunohistochemical studies.

All these studies require samples of the upper, medium and lower parts of the esophagus; front and back of the rumen; abomasum fundic glands; duodenum, plates of Péyer and jejunum of the small intestine; the ileocaecal valve of the large intestine; kidneys and left and right lobes of the liver; and pancreas. They will be performed by two stainings so as to see inflammatory responses.

The Statistical Monitoring, which will be a unique development in this country and there are not evidences of having been performed in the world, requires a detailed study of all the variables under the most strictly scientific rules.

In the ruminal microbiology, the stored samples, duly analyzed, of the 50 animals that were subjected to the study will facilitate future progress in the better development of ruminants.

Therefore, the objective of the compared researches is the following:
Test of two Breeding Systems for 8 weeks:
   A) Traditional system with AF 80 feed and Calf Starter
   B) Invented Feed
Test diagram:
   a) Newborn calves that have been with their mother between 3 and 5 days are separated.
   b) When starting breeding, glutaraldehyde trial is done in order to test colostrum.
   c) Earrings with an identification number are placed on them.
   d) Calves weighing
   e) In the Trial List entrance weight and inmunitary state are registered.
   f) Every seven days each calf's weight is written down on the list.
   g) In case of diarrhea or any illness, write down on the list specifying earring number and treatment performed.
   h) Calves should be fed at 8 a.m. and 4 p.m.
   i) The order of feed intakes should be followed.

Feeding guidelines are scheduled in the following way:
For conventionally fed animals:
a) Two daily intakes of AF80 substitute of 2 liters each.
b) Supply of Calf Starter from the entrance day, with the following expected daily intake:
   1. After 15 days.....0.500 kg
   2. After 30 days .....1,000 kg
   3. After 45 days .....1,500 kg
   More than 1,500 kg calf/day should not be supplied
c) Bale supply after the 20^{th} breeding day.

For animals treated with the Feed:
It will be diluted in a proportion of 9:1 at a temperature of 40°C and it will be administered according to the following Table of Intake:

| Breeding days | Milk diet | | Dry feed | | Bale |
|---|---|---|---|---|---|
| | Intake | Procedure | The Feed. | Calf starter | |
| 0-7 | 4 liters | 2+2 | 200 gr./day | No | No |
| 8-14 | 4 liters | 2+2 | 400 gr./day | No | No |
| 15-21 | No | No | 800 gr./day | No | No |
| 22-28 | No | No | 1000 gr./day | No | Yes (at discretion) |
| 29-35 | No | No | 1200 gr./day | No | Yes (at discretion) |
| 36-45 | No | No | 1000 gr./day | 500 gr./day | Yes (at discretion) |
| 45-56 | No | No | No | 1500 gr./day | Yes (at discretion) |
| Estimated Intake | 56 liters | | 30-35 kg./day | **15-20 kg./day** | 15/20 kg./day |

Comparative trials with a necropsies diagram, serologic sampling and ruminal acidity are scheduled to be done every four days in animals fed with the Feed, and every 15 days in animals conventionally fed.

The product and the use of the invention are defined in the following paragraphs.

Centesimal composition of the invented feed:
Dry matter 88/94% Protein 20/30% Fat
6/10% Fiber 3/6% Ash 5/7% Ca
1.2/1.4% P 0.8/1.2% Digestibility 93%

Metabolizable energy 4,200 cal.

Use of feed for calves breeding. The implementation of this feed is very simple. The priority of this invention is the harmonic development of calves, taking into account that the daily feeding and evolution basis will depend on the early development of their polygastric digestive system, using the monogastric one as little as possible, without affecting for this reason gain weight rates.

The fundamental difference with traditional breeding systems is that after a 15-day lactation, calves will only be fed with dry feed.

| Application scheme of the feeding method | | | |
|---|---|---|---|
| Breeding days | Milk diet | Feed | Bale |
| 6-7 | 4L. (2+2 ) | 200-400 gr./calf/day | NO |
| 8-14 | 4L.(2+2 ) | 400-800 gr./calf/day | NO |
| 15-21 | NO | 800-1200 gr./calf/day | NO |
| 21-28 | NO | 800-1300 gr./calf/day | YES (at discretion) |
| 28-35 | NO | 800-1500 gr./calf/day | YES (at discretion) |
| 36-45 | NO | 1000-1600 gr./calf/day +500gr.CS | YES (at discretion) |
| 45-56 | NO | 1500 gr./calf/day CS | YES (at discretion) |

CS stands for calves starter, commercial balanced feed name.

Management of herd in individual breeding. The same standards used in traditional breeding systems can be applied for calves management, to wit:
1) Calves must stand at the foot of their mother from birth to the next 48-72 hours, always bearing in mind that colostrum ingesta is fundamental in adequate amounts during the first 18 hours of life.
2) After this, calves must enter the individual breeding system, in stalls or in pens.
3) From the first individual breeding day, calves are fed with 4 liters of milk or milk substitutes, 2 intakes of two liters each. The invented feed will be administered according to the above table of intake, not exceeding the suggested intake amount.
4) Milk or milk substitutes will be administered until the 14^{th} breeding day, as stated before.
5) From the 15^{th} day, calves will always receive the Feed in the amounts stated in the table of intake.
6) From the 22^{nd} breeding day, baled fiber will be administered taking into account not to affect the Feed intakes stated for this breeding stage.
7) From the 28^{th} day, calves may abandon the stalls and be managed in groups. Special attention should be paid so that Feed intakes were as stated, if not, it is recommended to leave them in stalls until the 45^{th} day.
8) From the 36^{th} day, calves will receive an extra calf starter ration of 500 gr., which should be mixed with the Feed.
9) From the 45^{th} day on, the Feed supply is suspended, providing calves only with Calf Starter and bale.
10) From the 56^{th} day, calves are bred following each farm schemes. The estimated intakes are as follows:
   - Milk/substitute: 56 liters -Feed: 30/35 kg. -C.S: 15/20 kg.
   - Bale: 15/20 kg.
Some recommendations for practical purposes:
a) Calves should be sheltered both in winter and in summer.
b) It is fundamental for adequate calves development to administered good colostrum.
c) Check always that the Feed intakes were the ones suggested for that stage.
d) It is possible that within the first 48 hours post weaning, calves consume 600 gr. of the Feed.
e) Feed amounts higher than indicated in the breeding table should never be administered.
f) Until the 35^{th} breeding day, calves should not take more than four liters of water per day.
Water should be fresh and of good quality.

### PROCEDURE:

The different components of this invention have been stated in order to explain its nature. Moreover, this description is complemented by the Feed formula in comparison with other diets conventionally used in Individual Breeding.

### COMPARATIVE TABLE OF FEED FOR INDIVIDUAL CALVES BREEDING

| Diet Formula | Liquid Milk per liter | Milk Substitute per liter | Balanced Feed per kg. | FEED per kg. |
|---|---|---|---|---|
| Dry matter | 12% | 12% | 88% | 92% |
| Protein | 2.8/3.4% | 2.2/2.5% | 18% | 25% |
| Fat | 2.8/3.6% | 1 / 2% | 2% | 6.6% |
| Gross fiber | 0.01% | 0.03/0.09% | 6% | 4% |
| Ashes | 0.8% | 0.9% | 8% | 6% |
| Digestibilit y | 100% | 93% | 72% | 93% |
| Metabolizabl e energy | 600-650 cal. | 425-500 cal. | 2,700 cal. | 4,200 cal. |

This comparative table evidences that the distinct feature of the Feed described in this document is its digestibility, which is similar to that of liquid diets, milk and milk substitutes, and highly superior to that of known balanced feed, thus allowing calves to be weaned on the fourteenth day of Individual Breeding.

The breeding method described in this document allows rumen development on the 30/35 days of life, similar to the one developed on 4/5-month calves. Therefore, the animal may be included in traditional productive systems (feedlot/farm) much earlier and in a more efficient way.

In this way, preferred exemplary embodiments of the invention have been described, to which those skilled in the art may introduce modifications and/or changes without departing from the spirit and scope of the invention which is only limited by the appended claims.

## Claims

1. Feed for bovine neonates breeding, **characterized by** the following components: 88 to 94% of dry matter, 20 to 30% of protein, 6 to 10% of fat, 3 to 6% of fiber, 5 to 7% of ash, 1.2 to 1.4% of Ca and 0.9 to 1.1% of P. The product's digestibility reaches 93% providing a metabolizable energy of 4,2000 calories (sic).

2. Process for using the feed claimed in claim 1, **characterized by** comprising two parts: a liquid and a solid diet, the liquid diet being a dairy one, which is based on two daily intakes of 2 liters each of milk or milk substitutes, with an interval of not less than 8 hours during the first 14 days; during the first 7 days, there being supplemented with a 200/400 gr./day supply of this feed and a 400/800 gr./day supply in the following 7 days. the milk diet being interrupted between the 15th and 21st days, calves being only fed with dry feed -800 to 1,200 gr./day of this feed; between the 22^{nd} and the 28^{th} days, calves being fed with 800 to 1,300 gr./day of this feed, supplementing dry feed with baled fiber at discretion until the 56^{th} day, between the 28^{th} and the 35^{th} days, only 800 to 1,500 gr./day of this feed being supplied; from the 36^{th} to 45^{th} day, the supply may range from 1,000 to 1,600 gr./day plus 500 gr./day of calf starter; the diet being completed between the 46^{th} and 56^{th} days with 1,500 gr./day of calf starter.

3. Procedure, according to claims 1 and 2, **characterized by** supplying milk diet at a temperature that ranges from 38 to 40°C.

4. Process, according to claim 1 and following claims, **characterized by** the fact that supplies of milk and solid diets must be effected following a certain order and timetable.

5. Process, according to claim 1 and following claims, **characterized by** the fact that until the 56^{th} day of breeding, the complete diet may be composed of 56 liters of milk/milk substitutes, 30 to 35 kg. of this feed; 15 to 20 kg. of calf starter and 15 to 20 kg. of bale.

6. Process, according to claim 1 and following claims, **characterized by** the fact that water supplies are limited to 4 liters/day till the 35^{th} day.
